# FASCICULE DE BREVET EUROPEEN

(11) **EP 1 746 310 B1**
(45) Date de publication et mention de la délivrance du brevet: **16.01.2008**
(21) Numéro de dépôt: 06300745.4
(22) Date de dépôt: 03.07.2006
(51) Int. Cl.: F16H 61/24

(54) **Ensemble d'inertie pour dispositif de commande de boîte de vitesses**
Trägheitsanordnung für Schaltvorrichtung eines Getriebes
Inertial mass assembly for shifting device of a gear box

(30) Priorité: 19.07.2005 FR 0552238
(43) Date de publication de la demande: 24.01.2007
(73) Titulaire: Peugeot Citroen Automobiles SA, 78943 Vélizy-Villacoublay Cedex (FR)
(72) Inventeur: Graillot, Richard, 78370 Plaisir (FR); Richard, Olivier, 28130 Pierres (FR)

(56) Documents cités:
- EP-A- 1 369 620
- DE-A1- 1 655 821
- US-A- 6 082 216
- PATENT ABSTRACTS OF JAPAN vol. 1995, no. 06, 31 juillet 1995 (1995-07-31) & JP 07 071569 A (MITSUBISHI MOTORS CORP), 17 mars 1995 (1995-03-17)

## Description

La présente invention concerne un ensemble d'inertie pour un dispositif de commande de boîte de vitesses de véhicule automobile, tel que divulgué dans la publication EP 1 369 620 et correspondant au préambule de la revendication 1.

Elle concerne plus particulièrement un ensemble d'inertie utilisé dans le passage de vitesses.

Pour le passage des vitesses, il est connu d'utiliser des dispositifs de commande comportant essentiellement un levier de changement de vitesses, entraînant, par l'intermédiaire d'un câble de commande, le levier de passage de la boîte de vitesses.

Le câble de commande transmet le mouvement du levier de changement de vitesses au levier de passage.

II est d'usage d'implanter un ensemble d'inertie sur le levier de passage de la boîte de vitesses afin d'améliorer l'agrément de passage des vitesses. L'inertie générée par l'ensemble d'inertie permet notamment d'entraîner le levier de passage en rotation à partir d'un couple faible exercé au niveau du levier de changement de vitesses. La liaison entre l'ensemble d'inertie et le levier de passage est assurée par le biais d'une biellette.

Un ensemble d'inertie est en général constitué d'un élément monobloc en fonte obtenu par un procédé de moulage et comprenant une masselotte liée, par l'intermédiaire d'un bras, à un corps apte à pivoter sur le carter de la boîte de vitesse sous l'action de la biellette.

La masselotte constitue la masse d'inertie de l'ensemble d'inertie permettant d'obtenir une réduction des vibrations ressenties au niveau du dispositif de commande de la boîte de vitesses et garantissant notamment le confort du conducteur lors d'un changement de rapport.

Le corps de l'ensemble d'inertie comprend un moyen d'articulation formant pivot sur le carter de la boîte de vitesses et un moyen de fixation de la biellette.

Ce type d'ensemble d'inertie monobloc présente l'inconvénient d'être volumineux et de masse importante.

Les exigences de plus en plus fortes en matière de sécurité routière et de protection des passagers du véhicule automobile, en situation de choc, ont conduit les constructeurs automobiles a soumettre les véhicules à des batteries de crash tests comme ceux assurés par l'organisme européen indépendant EuroNCAP.

Les ensembles d'inertie connus présentent l'inconvénient d'engendrer, lors d'un choc important à l'avant du véhicule, une perforation du tablier et éventuellement un contact avec la colonne de direction. Ces ensembles d'inertie ne sont ainsi pas conformes aux normes établies par les organismes d'évaluation de la sécurité des véhicules automobiles.

La présente invention a notamment pour but d'éviter la perforation du tablier et le contact avec la colonne de direction en situation de choc et également de gagner en masse.

A cet effet, elle propose un ensemble d'inertie, pour un dispositif de commande de boîte de vitesses d'un véhicule automobile, comprenant une masse d'inertie solidaire d'un corps apte à pivoter autour d'un axe de rotation et fixé sur le carter de la boîte de vitesses, cet ensemble d'inertie étant caractérisé en ce que le corps comporte des moyens d'éjection de la masse d'inertie en cas de choc.

Selon une caractéristique, les moyens d'éjection comportent des zones fusibles aptes à se rompre au-delà d'un effort maximum déterminé, appliqué sur celles-ci lors d'un choc sur le véhicule.

Selon une autre caractéristique, les zones fusibles du corps sont constitués de moyens de retenue de la masse d'inertie.

Les moyens de retenue sont avantageusement des cloisons séparant des ouvertures adjacentes aménagées dans une paroi externe du corps.

Selon une caractéristique, les moyens d'éjection comportent en outre des moyens de guidage de la masse d'inertie qui coopèrent avec les moyens de retenue pour, en cas de choc, favoriser la rupture des cloisons et l'éjection de la masse d'inertie dans une direction déterminée.

Dans une réalisation particulière, l'ensemble d'inertie est constitué de deux blocs comprenant respectivement le corps et la masse d'inertie, ladite masse d'inertie étant constituée en un seul tenant d'un bras et d'une masselotte.

Avantageusement, le bras de la masse d'inertie est disposé à l'intérieur d'une cavité aménagée dans le corps.

Dans une réalisation particulière, le bras comporte une partie biseautée qui est disposée à l'intérieur de la cavité du corps et qui est conformée pour coopérer avec une rampe définissant les moyens de guidage de la masse d'inertie à l'intérieur de la cavité du corps.

Avantageusement, la cavité se caractérise par un surmoulage de la partie biseautée du bras de la masse d'inertie.

Dans un mode de réalisation particulier, la partie biseautée du bras est recouverte de picots sur ses faces supérieure et inférieure pour favoriser le maintien de la liaison.

La masse d'inertie est avantageusement en fonte et le corps de préférence en matière plastique, permettant un gain de masse

Dans un mode de réalisation particulier, l'ensemble d'inertie présente une raideur modale à une fréquence supérieure à 250 Hz.

D'autres caractéristiques et avantages de la présente invention apparaîtront à la lecture de la description détaillée ci-après, d'un exemple de mise en oeuvre non limitatif, faite en référence aux figures annexées dans lesquelles :
- la figure 1 est une vue en perspective d'une boîte de vitesses supportant un ensemble d'inertie conforme à l'invention ;
- la figure 2 est une vue éclatée de l'ensemble d'inertie ;
- la figure 3 représente l'ensemble d'inertie composé des deux blocs emboîtés, la masse dans le corps ;
- la figure 4 est une vue de dessus de l'ensemble d'inertie.

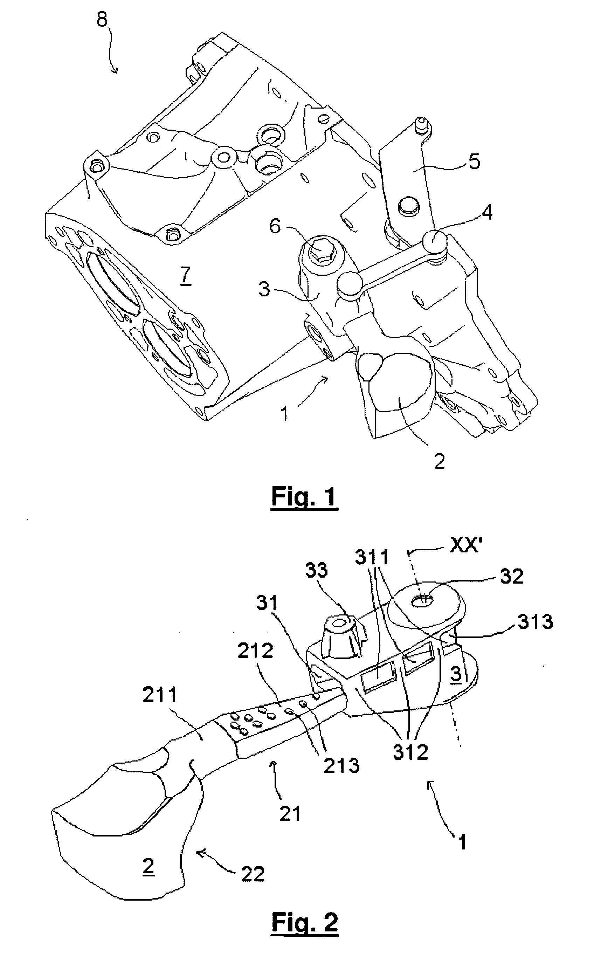

La figure 1 illustre une boîte de vitesses 8 supportant l'ensemble d'inertie 1 lié au levier de passage 5 par l'intermédiaire d'une biellette 4.

L'ensemble d'inertie 1 est composé principalement de deux blocs : une masse d'inertie 2 et un corps 3, solidaire de la masse d'inertie 2 et faisant office de support de la masse d'inertie 2. Les parties constitutives de l'objet de l'invention seront décrites en référence aux figures 2, 3 et 4.

La masse d'inertie 2 constitue la partie lourde de l'ensemble d'inertie 1. Elle comprend une masselotte 22 en porte à faux à l'extrémité d'un bras 21. La masse d'inertie 2 est réalisée par moulage de fonte mais peut être également conçue d'après les procédés de forgeage d'un acier connus dans l'art antérieur.

Le corps 3 est réalisé par un procédé de moulage de matière plastique. II comporte une cavité 31 apte à recevoir partiellement le bras 21 et assurer la liaison entre la masse d'inertie 2 et le corps 3. Le bras 21 est ainsi disposé à l'intérieur de la cavité 31.

La cavité 31 se caractérise par exemple par un surmoulage partiel du bras 21, c'est-à-dire que le bras 21 en fonte est partiellement déposé dans un moule, puis une injection de plastique à l'intérieur dudit moule assure la forme du corps 3.

Comme illustré sur la figure 2, la cavité 31 présente des ouvertures adjacentes 311 sur la face latérale droite du corps 3.

Les ouvertures adjacentes 311 sont séparées par des cloisons 312 qui constituent autant de moyens de retenue du bras 21 à l'intérieur de la cavité 31.

Les cloisons 312 définissent les zones fusibles aptes à se rompre au-delà d'un effort maximum appliqué sur celles-ci lors d'un choc sur le véhicule. Le nombre, l'épaisseur et la dimension des cloisons 312 sont déterminés pour optimiser l'éjection de la masse d'inertie 2 en cas de choc. La figure 2 illustre un mode de réalisation particulier comprenant trois cloisons 312 séparant respectivement trois ouvertures adjacentes 311.

Le bras 21 présente une forme générale de couteau comportant deux parties : une partie droite définissant un manche 211 et une deuxième partie biseautée, qui prolonge le manche 211, définissant une lame 212.

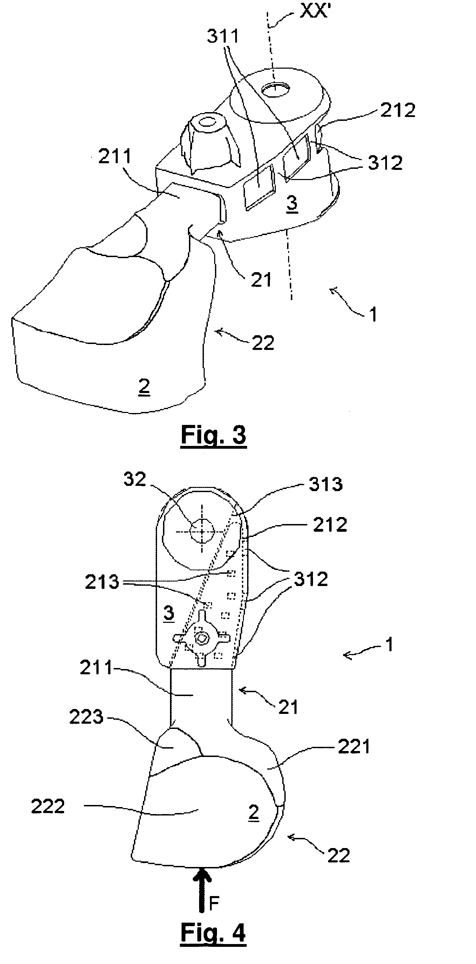

Comme représenté sur la figure 4 en trait interrompu, la lame 212 constitue la partie disposée à l'intérieur de la cavité 31 du corps 3. Par exemple, la cavité 31 se caractérise par un surmoulage de la partie 212 du bras 21.

La cavité 31 comporte une rampe 313 conformée pour épouser la lame 212 et située sur la face latérale gauche de la cavité 31, à l'opposé de la face latérale droite où sont aménagées les ouvertures 311 et les cloisons 312 aptes à retenir la lame 212.

La lame 212 est recouverte, sur les faces horizontales supérieure et inférieure, de picots 213 formés de petites excroissances massiques de forme générale parallélépipédique, qui favorisent la tenue mécanique du bras 21 dans la cavité 31.

La masselotte 22 est un bloc massique, en forme générale de bol, présentant sur sa face supérieure horizontale deux évidements 222 et 223 et un rebord extérieur proéminent 221.

Le premier évidement 222 est situé le plus à l'extérieur de l'ensemble d'inertie 1, à l'opposé de l'axe de rotation XX' de l'ensemble d'inertie 1 sur le carter 7, et adjacent au deuxième évidement 223 situé à l'interface gauche entre la masselotte 22 et le bras 21.

Le rebord extérieur proéminent 221 fait office d'excroissance massique entourant partiellement le bord latéral droit du bol à l'interface entre la masselotte 22 et le bras 21.

Ces reliefs 221-223 assurent le réglage en position du centre de gravité de la masse d'inertie 2. En effet, le centre de gravité est rapproché de l'axe de rotation XX' pour conserver le caractère inertiel souhaité de l'ensemble d'inertie 1.

Comme illustré sur la figure 2, le corps 3 comprend un réceptacle en saillie 33 aménagé sur la face supérieure du corps 3 et servant de logement à une rotule, non représentée, destinée à coopérer avec la biellette 4.

Le corps 3 est composé d'une cavité 32 ayant pour axe XX' et destiné à accueillir les moyens de fixation et de pivot de l'ensemble d'inertie 1 sur le carter 7 de la boîte de vitesses 8, comprenant notamment la vis de fixation 6.

Lors d'un choc à l'avant du véhicule, le bloc moteur se déplace vers l'arrière du véhicule entraînant la collision de l'ensemble d'inertie 1, selon l'invention, avec le tablier. Le contact entre l'ensemble d'inertie 1 et le tablier conduit à un effort sur la masse d'inertie 2 selon une direction F sensiblement dans le même axe que le bras 21 (voir figure 4).

Sous l'effet du choc, le bras 21 s'enfonce à l'intérieur de la cavité 31 et la paroi en biseau de la lame 212 est guidée via la rampe 313 de guidage contre les cloisons 312. Conjointement à l'action des picots 213, cet enfoncement guidé engendre un effort sur les cloisons 312 et ainsi une déformation de ces éléments en matière plastique jusqu'à leur rupture.

Pour un effort sur la masse d'inertie 2 supérieur par exemple à 5000 N, les cloisons 312, qui définissent les zones fusibles du corps 3, se rompent. La rupture des zones fusibles 312 entraîne la destruction du corps 3 et l'éjection de la masse d'inertie 2 dans une direction déterminée par l'action de guidage de la rampe 311. Cette éjection évite ainsi la perforation du tablier et un contact avec la colonne de direction.

Avantageusement, le gain de masse est en outre permis par la forme particulière de la masse d'inertie 2 et l'utilisation d'un corps 3 en matière plastique comme support de la masse d'inertie 2.

Les principaux avantages apportés par l'invention sont donc les suivants :
- une amélioration accrue de la sécurité du véhicule et du passager ; et
- un gain en masse.

Bien entendu l'exemple de mise en oeuvre évoqué ci-dessus ne présente aucun caractère limitatif et d'autres détails et améliorations peuvent être apportés à l'ensemble d'inertie 1 selon l'invention, sans pour autant sortir du cadre de l'invention où d'autres formes de masse peuvent être réalisées.

## Revendications

1. Ensemble d'inertie (1), notamment pour un dispositif de commande de boîte de vitesses (8) d'un véhicule automobile, comprenant une masse d'inertie (2) solidaire d'un corps (3) apte à pivoter autour d'un axe de rotation (XX') et fixé sur le carter (7) de la boîte de vitesses (8), **caractérisé en ce que** le corps (3) comporte des moyens d'éjection de la masse d'inertie (2) en cas de choc.

2. Ensemble d'inertie (1) selon la revendication 1, **caractérisé en ce que** les moyens d'éjection comportent des zones fusibles (312) aptes à se rompre au-delà d'un effort maximum déterminé, appliqué sur celles-ci lors d'un choc sur le véhicule.

3. Ensemble d'inertie (1) selon la revendication 2, **caractérisé en ce que** les zones fusibles (312) sont constituées de moyens de retenue de la masse d'inertie (2).

4. Ensemble d'inertie (1) selon la revendication 3, **caractérisé en ce que** les moyens de retenue (312) définissent des cloisons séparant des ouvertures adjacentes (311) aménagées dans une paroi externe du corps (3).

5. Ensemble d'inertie (1) selon la revendication 4, **caractérisé en ce qu**e les moyens d'éjection comportent en outre des moyens de guidage (313) de la masse d'inertie (2) qui coopèrent avec les moyens de retenue (312) pour, en cas de choc, favoriser la rupture des cloisons (312) et l'éjection de la masse d'inertie (2) dans une direction déterminée.

6. Ensemble d'inertie (1) selon l'une quelconque des revendications 1 à 5, **caractérisé en ce qu**'il est constitué de deux blocs comprenant respectivement le corps (3) et la masse d'inertie (2), ladite masse d'inertie (2) étant constituée en un seul tenant d'un bras (21) et d'une masselotte (22).

7. Ensemble d'inertie (1) selon la revendication 6, **caractérisé en ce que** le bras (21) de la masse d'inertie (2) est disposé à l'intérieur d'une cavité (31) aménagée dans le corps (3).

8. Ensemble d'inertie (1) selon la revendication 7, **caractérisé en ce que** le bras (21) comporte une partie biseautée (212) qui est disposée à l'intérieur de la cavité (31) du corps (3) et qui est conformée pour coopérer avec une rampe (313) définissant les moyens de guidage de la masse d'inertie (2) à l'intérieur de la cavité (31) du corps (3).

9. Ensemble d'inertie (1) selon la revendication 8, **caractérisé en ce que** la cavité (31) se **caractérise par** un surmoulage de la partie biseautée (212) du bras (21) de la masse d'inertie (2).

10. Ensemble d'inertie (1) selon l'une quelconque des revendications 8 et 9, **caractérisé en ce que** la partie biseautée (212) du bras (21) est recouverte de picots (213) sur ses faces supérieure et inférieure.

11. Ensemble d'inertie (1) selon l'une quelconque des revendications précédentes, **caractérisé en ce que** la masse d'inertie (2) est en fonte et le corps (3) en matière plastique.

12. Boîte de vitesses (8), notamment pour véhicule automobile comprenant un levier de passage des vitesses (5) en liaison avec un ensemble d'inertie (1) selon l'une quelconque des revendications précédentes.

## Claims

1. Inertial mass assembly (1) particularly for a device for controlling a gearbox (8) of a motor vehicle, comprising an inertial mass (2) secured to a body (3) capable of pivoting about an axis of rotation (XX') and fixed to the housing (7) of the gearbox (8), **characterized in that** the body (3) comprises means of ejecting the inertial mass (2) in the event of an impact.

2. Inertial mass assembly (1) according to Claim 1, **characterized in that** the ejection means comprise frangible regions (312) capable of breaking when a load above a determined maximum load is applied to them when the vehicle experiences an impact.

3. Inertial mass assembly (1) according to Claim 2, **characterized in that** the frangible regions (312) consist of means of retaining the inertial mass (2).

4. Inertial mass assembly (1) according to Claim 3, **characterized in that** the retaining means (312) define partitions separating adjacent openings (311) made in an external wall of the body (3).

5. Inertial mass assembly (1) according to Claim 4, **characterized in that** the ejection means further comprise guide means (313) for guiding the inertial mass (2), these collaborating with the retaining means (312) in order, in the event of an impact, to encourage the partitions (312) to break and the inertial mass (2) to be ejected in a determined direction.

6. Inertial mass assembly (1) according to any one of Claims 1 to 5, **characterized in that** it consists of two units, one comprising the body (3) and the other comprising the inertial mass (2), the said inertial mass (2) being formed, in a single piece, from an arm (21) and from a flyweight (22).

7. Inertial mass assembly (1) according to Claim 6, **characterized in that** the arm (21) of the inertial mass (2) is positioned inside a cavity (31) formed in the body (3).

8. Inertial mass assembly (1) according to Claim 7, **characterized in that** the arm (21) comprises a bevelled part (212) which is positioned inside the cavity (31) of the body (3) and which is shaped in such a way as to collaborate with a ramp (313) that defines the means of guiding the inertial mass (2) inside the cavity (31) of the body (3).

9. Inertial mass assembly (1) according to Claim 8, **characterized in that** the cavity (31) is **characterized by** an overmoulding of the bevelled part (212) of the arm (21) of the inertial mass (2).

10. Inertial mass assembly (1) according to any one of Claims 8 and 9, **characterized in that** the bevelled part (212) of the arm (21) is covered with spikes (213) on its upper and lower faces.

11. Inertial mass assembly (1) according to any one of the preceding claims, **characterized in that** the inertial mass (2) is made of cast iron and the body (3) is made of plastic.

12. Gearbox (8), particularly for a motor vehicle comprising a gear lever (5) connected with an inertial mass assembly (1) according to any one of the preceding claims.

## Patentansprüche

1. Trägheitseinheit (1), insbesondere für eine Steuervorrichtung eines Schaltgetriebes (8) eines Kraftfahrzeugs, mit einer Trägheitsmasse (2), die fest mit einem Körper (3) verbunden ist, der um eine Drehachse (XX') drehen kann und am Gehäuse (7) des Schaltgetriebes (8) befestigt ist, **dadurch gekennzeichnet, dass** der Körper (3) Auswurfmittel der Trägheitsmasse (2) im Fall eines Stoßes aufweist.

2. Trägheitseinheit (1) nach Anspruch 1, **dadurch gekennzeichnet, dass** die Auswurfmittel Sicherungszonen (312) aufweisen, die jenseits einer bestimmten maximalen Kraft brechen können, die auf diese bei einem Stoß auf das Fahrzeug angewendet wird.

3. Trägheitseinheit (1) nach Anspruch 2, **dadurch gekennzeichnet, dass** die schmelzbaren Zonen (312) aus Rückhaltemitteln der Trägheitsmasse (2) bestehen.

4. Trägheitseinheit (1) nach Anspruch 3, **dadurch gekennzeichnet, dass** die Rückhaltemittel (312) Trennwände definieren, die benachbarte Öffnungen (311) trennen, die in einer Außenwand des Körpers (3) ausgebildet sind.

5. Trägheitseinheit (1) nach Anspruch 4, **dadurch gekennzeichnet, dass** die Auswurfmittel außerdem Führungsmittel (313) der Trägheitsmasse (2) aufweisen, die mit den Rückhaltemitteln (312) zusammenwirken, um im Fall eines Stoßes den Bruch der Trennwände (312) und den Auswurf der Trägheitsmasse (2) in einer bestimmten Richtung zu begünstigen.

6. Trägheitseinheit (1) nach einem der Ansprüche 1 bis 5, **dadurch gekennzeichnet, dass** sie aus zwei Blöcken besteht, die den Körper (3) bzw. die Trägheitsmasse (2) aufweisen, wobei die Trägheitsmasse (2) aus einem Stück aus einem Arm (21) und einem Ausgleichsgewicht (22) besteht.

7. Trägheitseinheit (1) nach Anspruch 6, **dadurch gekennzeichnet, dass** der Arm (21) der Trägheitsmasse (2) innerhalb eines Hohlraums (31) angeordnet ist, der im Körper (3) ausgespart ist.

8. Trägheitseinheit (1) nach Anspruch 7, **dadurch gekennzeichnet, dass** der Arm (21) einen abgeschrägten Bereich (212) aufweist, der innerhalb des Hohlraums (31) des Körpers (3) angeordnet und ausgebildet ist, um mit einer Rampe (313) zusammenzuwirken, die die Führungsmittel der Trägheitsmasse (2) im Inneren des Hohlraums (31) des Körpers (3) definiert.

9. Trägheitseinheit (1) nach Anspruch 8, **dadurch gekennzeichnet, dass** der Hohlraum (31) durch eine Überformung des abgeschrägten Bereichs (212) des Arms (21) mit der Trägheitsmasse (2) **gekennzeichnet** ist.

10. Trägheitseinheit (1) nach einem der Ansprüche 8 und 9, **dadurch gekennzeichnet, dass** der abgeschrägte Bereich (212) des Arms (21) auf seiner Ober- und Unterseite von Zäpfchen (213) bedeckt ist.

11. Trägheitseinheit (1) nach einem der vorhergehenden Ansprüche, **dadurch gekennzeichnet, dass** die Trägheitsmasse (2) aus Gusseisen und der Körper (3) aus Kunststoff ist.

12. Schaltgetriebe (8), insbesondere für ein Kraftfahrzeug, das einen Gangschalthebel (5) in Verbindung mit einer Trägheitseinheit (1) nach einem der vorhergehenden Ansprüche aufweist.
